# FASCICULE DE BREVET EUROPEEN

(11) **EP 3 113 976 B1**
(45) Date de publication et mention de la délivrance du brevet: **04.12.2019**
(21) Numéro de dépôt: 14713534.7
(22) Date de dépôt: 05.03.2014
(51) Int. Cl.: B60N 2/58

(54) **COIFFE DE SIEGE AUTOMOBILE**
SITZBEZUG FÜR KRAFTFAHRZEUG
MOTOR-VEHICLE SEAT COVER

(43) Date de publication de la demande: 11.01.2017
(73) Titulaire: Faurecia Sièges d'automobile S.A., 92000 Nanterre (FR)
(72) Inventeur: BOINAIS, Olivier, West Bloomfield, Michigan 48322 (US); LOPEZ, Laetitia, Royal Oak, Michigan 48073 (US); KOCH, Lisa, 76185 Karlsruhe (DE)
(74) Mandataire: Cabinet Beaumont
(86) Numéro de dépôt international: PCT/FR2014/050498
(87) Numéro de publication internationale: WO 2015/132476

(56) Documents cités:
- AU-B2- 674 917
- FR-A1- 2 838 927
- US-A- 5 501 165

## Description

La présente description concerne une coiffe de siège de véhicule, notamment de véhicule automobile, un siège équipé d'une telle coiffe et un procédé de fabrication d'une telle coiffe.

Un siège de véhicule comprend généralement une armature recouverte d'une garniture. La garniture comprend une matelassure fixée à l'armature et recouverte d'une coiffe. La coiffe correspond, par exemple, à un revêtement en cuir, en textile tissé ou en textile non tissé. La coiffe épouse généralement la forme de la matelassure.

US-A-5501165 décrit une coiffe comprenant des lignes de couture.

Il peut être souhaitable de mettre en forme la coiffe de façon à présenter des zones de relief, notamment pour améliorer l'aspect esthétique du siège. Il est connu de réaliser des effets de relief dans la coiffe en disposant des lignes de couture de façon adaptée. Toutefois, les formes tridimensionnelles obtenues restent relativement simples.

Il serait souhaitable de pouvoir réaliser des effets de relief plus complexes, par exemple, pour obtenir une coiffe qui, au moins sur une zone, présente une surface extérieure ayant de nombreuses zones en relief.

Un mode de réalisation de la présente description vise à modifier l'aspect esthétique de la coiffe d'un siège de véhicule. Un autre mode de réalisation vise plus particulièrement à apporter des effets de relief à la coiffe d'un siège de véhicule.

La coiffe selon l'invention comprend les caractéristiques de la revendication 1.

Ainsi, un mode de réalisation prévoit une coiffe de siège comportant un ensemble de points de fixation comprenant chacun une première portion de la coiffe fixée à une deuxième portion de la coiffe, la première portion de la coiffe étant entourée ou prolongée d'une troisième portion de la coiffe et la deuxième portion de la coiffe étant entourée ou prolongée d'une quatrième portion de la coiffe, la troisième portion de la coiffe n'étant pas fixée à la quatrième portion de la coiffe, et comprenant, pour chaque ensemble, un pli entre la première portion de la coiffe et la deuxième portion de la coiffe.

Selon un mode de réalisation, la coiffe comprend une première face et une deuxième face opposée à la première face, dans laquelle les points de fixation sont situés du côté de la première face.

Les points de fixation étant tous situés du même côté, un aspect esthétique homogène est obtenu.

Selon un mode de réalisation, les points de fixation sont alignés le long de rangées de points de fixation.

L'alignement des points de fixation permet l'obtention, du côté d'une face visible de la coiffe, de plis disposés de façon alignée.

Selon un mode de réalisation, les points de fixation sont décalés d'une rangée de points de fixation par rapport à la rangée de points de fixation adjacente.

Le décalage des points de fixation d'une rangée de points de fixation à l'autre permet l'obtention, du côté de la face visible de la coiffe, de plis qui se superposent partiellement.

Selon un mode de réalisation, les points de fixation sont répartis régulièrement sur chaque rangée de points de fixation.

La disposition régulière des points de fixation permet l'obtention, du côté de la face visible de la coiffe, de plis disposés de façon régulière.

Un mode de réalisation prévoit également un siège de véhicule comprenant au moins une matelassure recouverte d'une coiffe de siège selon l'une quelconque des revendications précédentes.

Selon un mode de réalisation, le matériau de la matelassure remplit au moins partiellement tout ou partie des plis.

Le fait que les plis soient au moins partiellement remplis de mousse permet d'obtenir des effets de relief plus ou moins marqués.

Selon un mode de réalisation, les points de fixation sont disposés du côté de la matelassure.

Les points de fixation ne sont avantageusement pas visibles pour un occupant du véhicule.

Un mode de réalisation prévoit également un procédé de fabrication d'une coiffe de siège de véhicule, comprenant la formation d'un ensemble de points de fixation comprenant chacun une première portion de la coiffe fixée à une deuxième portion de la coiffe, la première portion de la coiffe étant entourée ou prolongée d'une troisième portion de la coiffe et la deuxième portion de la coiffe étant entourée ou prolongée d'une quatrième portion de la coiffe, la troisième portion de la coiffe n'étant pas fixée à la quatrième portion de la coiffe, et comprenant, pour chaque ensemble, la formation d'un pli entre la première portion de la coiffe et la deuxième portion de la coiffe.

Selon un mode de réalisation, pour chaque ensemble de points de fixation, la fixation de la première portion à la deuxième portion est réalisée par couture, par collage et/ou par soudage.

Les points de fixation peuvent, de façon avantageuse, être réalisées par des techniques de couture, de collage et/ou de soudage qui sont habituelles pour la fabrication d'une coiffe de siège de véhicule.

En particulier, la fixation par collage, et éventuellement par soudage, permet éventuellement qu'il n'y ait pas d'éléments apparents du côté de la face intérieure. De ce fait, la coiffe peut alors être utilisée à l'envers, la face intérieure étant alors orientée vers l'extérieur du siège. Ceci permet d'obtenir de nouveaux effets de relief.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, dans lesquelles :
la figure 1 est une vue de face, partielle et schématique, d'un exemple de siège ;
la figure 2 est une vue en coupe, partielle et schématique, d'un dossier de siège ;
la figure 3 est une coupe, partielle et schématique, d'un mode de réalisation d'un coussin de siège selon la présente description ;
les figures 4 et 5 sont des vues de face agrandies, partielles et schématiques, respectivement d'une première face et d'une deuxième face d'une coiffe du coussin de la figure 3 ;
la figure 6 est une vue en coupe, partielle et schématique, d'un autre mode de réalisation d'un coussin de siège selon la présente description ; et
les figures 7A à 7E illustrent de façon schématique des étapes successives d'un mode de réalisation d'un procédé de fabrication de la coiffe.

Il est à noter que, sur les figures, les éléments structurels et/ou fonctionnels communs aux différents modes de réalisation peuvent présenter les mêmes références. Ainsi, sauf mention contraire, de tels éléments peuvent disposer de propriétés structurelles, dimensionnelles et matérielles identiques.

Dans la description qui suit, lorsque l'on fait référence à des qualificatifs de position absolue (tels que les termes "avant", "arrière", "haut", "bas", "gauche", "droite", etc.), de position relative (tels que les termes "dessus", "dessous", "supérieur", "inférieur", etc.) ou d'orientation (tels que les termes "vertical", "horizontal", etc.), il est fait référence à un siège dans une position normale d'utilisation de celui-ci dans le sens de progression ordinaire du véhicule.

Par souci de clarté, seuls les étapes et éléments utiles à la compréhension des modes de réalisation qui vont être décrits ont été représentés sur les figures et seront détaillés. En particulier, la réalisation des autres constituants d'une assise ou d'un dossier n'a pas été détaillée, les modes de réalisation décrits étant compatibles avec les réalisations usuelles de ces éléments.

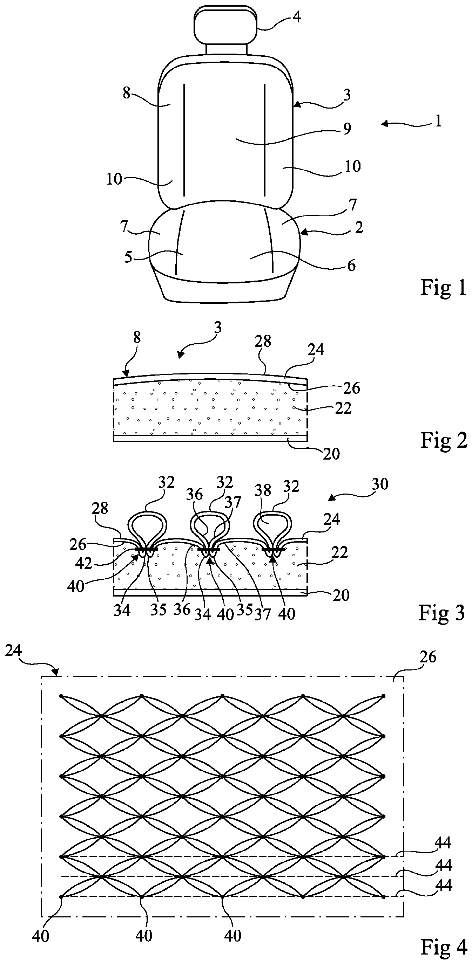

La figure 1 est une vue de face, partielle et schématique, d'un siège 1 pour véhicule automobile.

Le siège 1 se compose d'une assise 2 sur laquelle est articulé un dossier 3, pouvant être surmonté optionnellement d'un appui-tête 4. L'assise 2 comprend un coussin d'assise 5, ayant, par exemple, une partie centrale, généralement appelée médaillon d'assise 6, entourée par des rembordements ou supports latéraux 7, également appelés supports latéraux d'assise 7. De façon analogue, le dossier 3 comprend un coussin de dossier 8, ayant, par exemple, une partie centrale, généralement appelée médaillon de dossier 9, entourée par des rembordements ou supports latéraux 10, également appelés supports latéraux de dossier 10.

La figure 2 est une vue en coupe, partielle et schématique, du dossier 3 du siège 1 de la figure 1. Le dossier 3 comprend une armature 20. De façon connue, le coussin de dossier 8 comprend une matelassure 22, constituée par exemple par un bloc de mousse, fixée à l'armature 20 et une coiffe 24 recouvrant la matelassure 22. La matelassure 22 est, par exemple, un bloc de mousse en polyuréthane. La coiffe 24 comprend une première face 26, avantageusement une face intérieure 26 orientée du côté de la matelassure 22, et une deuxième face 28, avantageusement une face extérieure 28, opposée à la première face 26 et visible par un occupant du véhicule.

Comme cela est représenté en figure 2, la coiffe 24 épouse sensiblement la forme de la matelassure 22. Ainsi, il peut alors être difficile d'obtenir des effets de relief qui peuvent notamment améliorer l'aspect esthétique de la coiffe 24.

La figure 3 est une coupe analogue à la figure 2 d'un mode de réalisation d'un coussin 30. Le coussin 30 peut être utilisé comme coussin de dossier 8 ou coussin d'assise 5 du siège 1 représenté en figure 1.

Le coussin 30 comprend l'ensemble des éléments du coussin 3 représenté en figure 2 à la différence que la coiffe 24 comprend des plis 32, éventuellement non aplatis, orientés vers l'extérieur. Chaque pli 32 est obtenu par la mise en contact d'une première portion 34 de la première face 26 de la coiffe 24 et d'une deuxième portion 35 de la première face 26 de la coiffe 24, fixées l'une à l'autre sur une zone ponctuelle 40, également appelée point de fixation 40 dans la suite de la description. Les surfaces de la première portion 34 et de la deuxième portion 35 fixées l'une à l'autre sont, par exemple, chacune inférieure à 50 mm². Pour chaque point de fixation 40, la première portion 34 de la première face 26 de la coiffe 24 est entourée ou prolongée par une troisième portion 36 de la première face 26 de la coiffe 24. La deuxième portion 35 de la première face 26 de la coiffe 24 est entourée ou prolongée par une quatrième portion 37 de la première face 26 de la coiffe 24. Selon la présente description, la troisième portion 36 de la première face 26 de la coiffe 24 n'est pas fixée à la quatrième portion 37 de la première face 26 de la coiffe 24 pour le point de fixation 40 considéré. Les plis 32 sont, par exemple, disposés au niveau d'une partie ou de la totalité du coussin 30. A titre d'exemple, les plis 32 peuvent seulement être prévus au niveau du médaillon de dossier 9 et/ou du médaillon d'assise 6. Chaque pli 32 définit un volume interne 38 qui, dans le mode de réalisation de la figure 3, est rempli d'air.

La coiffe 24 peut être en cuir, en croûte de cuir, en peaux diverses et variées, en textile tissé ou non tissé, notamment en textile enduit, notamment de plastique, en vinyle, en matériau composite, notamment le produit commercialisé sous la marque enregistrée Alcantara, ou en tout autre type de revêtement adapté à constituer la face apparente d'un siège. La coiffe 24 peut avoir une épaisseur qui varie de 0,5 mm à 1,5 mm, préférentiellement de 0,8 mm à 1,2 mm.

Dans le mode de réalisation de la figure 3, le point de fixation 40 entre la première portion 34 et la deuxième portion 35 de la coiffe 24 est réalisé par un point de couture 42. A titre de variante, la première portion 34 et la deuxième portion 35 de la coiffe 24 peuvent être fixées l'une à l'autre par collage ou par soudage. Dans le cas d'une fixation par soudage, un matériau d'apport peut être présent selon la nature du matériau constituant la coiffe 24. A titre d'exemple, lorsque la coiffe 24 est en tissu, la fixation par soudage peut être réalisée par fusion locale de la coiffe sans matériau d'apport. Lorsque la coiffe 24 est en cuir, la fixation par soudage peut être réalisée avec un matériau d'apport.

La fixation de la coiffe 24 sur la matelassure 22 s'effectue, par exemple, par bandes auto-agrippantes (non représentées) appliquées par collage ou surmoulage en surface de la coiffe 24 et de la matelassure 22. Un tel agencement facilite le remplacement de la coiffe 24 en cas d'usure ou de défaut. En variante, la coiffe 24 peut être collée ou clippée à la matelassure 22 ou simplement maintenue en position en étant mise sous tension. On peut également prévoir des jupes latérales (non représentées) participant à la tenue de la coiffe 24 sur la matelassure 22. De telles jupes latérales sont généralement cousues aux bords de la coiffe 24.

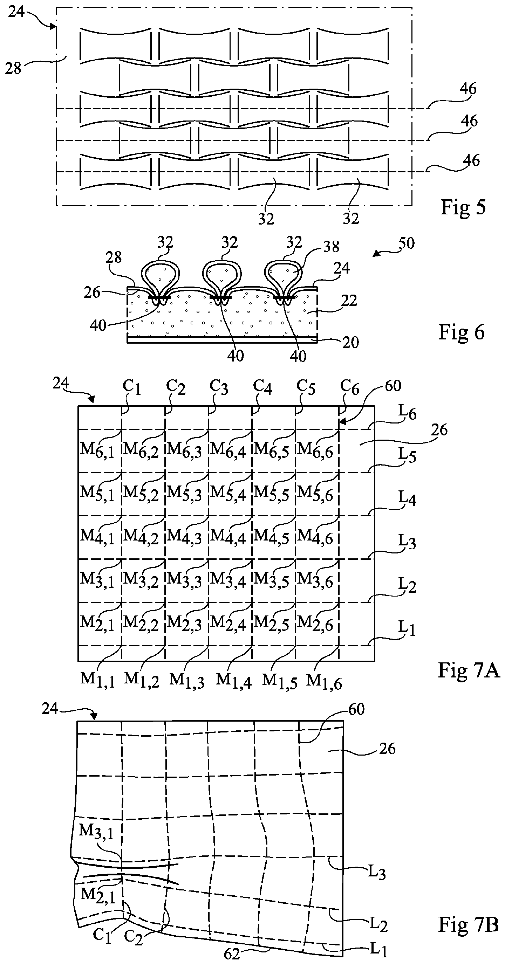

Les figures 4 et 5 sont des vues de face agrandies, partielles et schématiques, respectivement d'une partie de la première face 26 et de la deuxième face 28 de la coiffe 24 de la figure 3. Dans ce mode de réalisation, les points de fixation 40 sont disposés en rangées de points de fixation 44, par exemple, orientées horizontalement, et en colonnes, par exemple, orientées verticalement. A titre d'exemple, sur chaque rangée de points de fixation 44, les points de fixation 40 sont régulièrement espacés. A titre d'exemple, la distance, ou pas, entre deux points de fixation 40 est la même sur chaque rangée de points de fixation 44. En outre, les points de fixation 40 sont décalés d'une rangée de points de fixation 44 par rapport à la rangée de points de fixation 44 adjacente, trois rangées de points de fixation 44 étant représentées par des traits pointillés en figure 5. A titre d'exemple, les points de fixation sont décalés d'un demi-pas entre deux rangées de points de fixation 44 adjacentes.

Alternativement, selon un autre exemple de réalisation non représenté, sur chaque rangée de points de fixation 44, les points de fixation 40 sont espacés d'un pas variable. De plus, les points de fixation 40 peuvent être alignés d'une rangée de points de fixation 44 par rapport à la rangée de points de fixation 44 adjacente.

La disposition des points de fixation 40 représentée en figure 4 permet d'obtenir une disposition de plis 32 telle que représentée en figure 5. En particulier, les plis 32 sont agencés selon des rangées de plis 46, parallèles aux rangées de points de fixation 44, trois rangées de plis 46 étant représentées par des traits pointillés en figure 5. En outre, les plis 32 sont décalés d'une rangée de plis 46 par rapport à la rangée de plis 46 adjacente et peuvent se superposer partiellement.

Alternativement, selon un autre exemple de réalisation non représenté, les plis 32 peuvent être alignés d'une rangée de plis 46 par rapport à la rangée de plis 46 adjacente.

Toutefois, il est clair que la disposition des points de fixation 40 peut être différente du mode de réalisation représenté sur les figures 4 et 5 et sera adapté selon la disposition souhaitée des plis 32 du côté de la deuxième face 28. A titre d'exemple, les points de fixation 40 peuvent ne pas être disposés de façon régulière de sorte que les plis 32 ne sont pas répartis de façon régulière.

Dans le mode de réalisation représenté en figure 3, la coiffe 24 recouvre la matelassure 22. Toutefois, la matelassure 22 ne pénètre pas dans les plis 32 dont le volume interne 38 est rempli d'air.

La figure 6 est une vue analogue à la figure 3 d'un autre mode de réalisation d'un coussin 50 comprenant l'ensemble des éléments du coussin 30 du mode de réalisation de la figure 3 et dans lequel le volume interne 38 de toute ou partie des plis 32 est, en partie ou en totalité, rempli du matériau de la matelassure 22.

Un mode de réalisation d'un procédé de fabrication du mode de réalisation de la coiffe 30 représenté en figure 3 comprend la fabrication de la coiffe 24, la mise en forme de la coiffe 24 et la fabrication de la matelassure 22 de façon distincte de la coiffe 24 et la fixation de la coiffe 24 à la matelassure.

Un mode de réalisation d'un procédé de fabrication du mode de réalisation de la coiffe 50 représenté en figure 5 comprend la fabrication de la coiffe 24, la mise en forme de la coiffe 24 et la fabrication de la matelassure 22 au contact de la coiffe 24 de sorte que le matériau constituant la matelassure 22 se répande au moins partiellement dans toute ou partie des plis 32. A titre d'exemple, la matelassure 22 est réalisée par injection de mousse au contact de la coiffe 24.

Les figures 7A à 7E illustrent, de façon schématique, des étapes successives d'un mode de réalisation d'un procédé de fabrication de la coiffe 24. Elles représentent la première face 26 de la coiffe 24 à des étapes successives d'un mode de réalisation d'un procédé de mise en forme de la coiffe 24.

Sur les figures 7A à 7E, on a représenté un quadrillage 60 en traits pointillés sur la première face 26 de la coiffe 24 de façon à mieux visualiser les déformations appliquées à la coiffe 24. Le quadrillage 60 comprend des lignes Lᵢ et des colonnes Cⱼ, 'i' et 'j' étant des nombres entiers, variant selon l'exemple présenté sur les figures 7A à 7E de 1 à 6. On appelle M_{i,j} le point à l'intersection de la ligne Lᵢ et de la colonne Cⱼ.

De façon générale, la configuration représentée sur les figures 4 et 5 est obtenue en fixant :
- chaque point M_{2m,2n} avec le point M_{2m+1,2n} ; et
- chaque point M_{2m+1,2n+1} avec le point M_{2m+2,2n+1}, où m et n sont des nombres entiers.

Plus spécifiquement, la figure 7A représente la coiffe 24 à plat et la figure 7B représente la coiffe 24 pliée pour rapprocher le point M_{2,1} du point M_{3,1}.

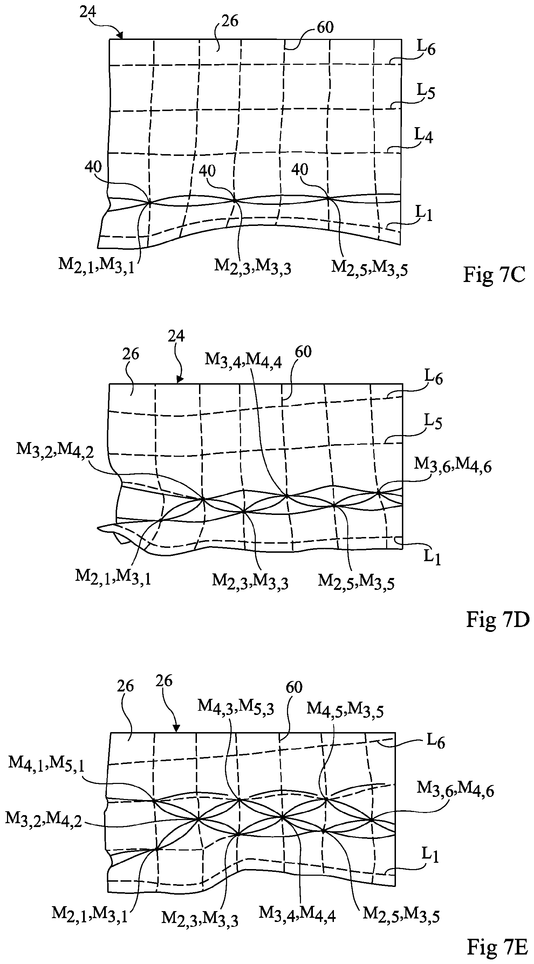

La figure 7C représente la coiffe 24 pliée pour fixer :
- le point M_{2,1} au point M_{3,1},
- le point M_{2,3} au point M_{3,3}, et
- le point M_{2,5} au point M_{3,5},
la fixation pouvant être réalisée par couture, collage ou soudage.

La figure 7D représente la coiffe 24 pliée pour fixer :
- le point M_{3,2} au point M_{4,2},
- le point M_{3,4} au point M_{4,4}, et
- le point M_{3,6} au point M_{4,6},
la fixation pouvant être réalisée par couture, collage ou soudage.

La figure 7E représente la coiffe 24 pliée pour fixer les points de fixation 40 des rangées L₄ et L₅ de façon analogue à l'étape présentée à la figure 7C, la fixation pouvant être réalisée par couture, collage ou soudage.

Les étapes décrites précédemment sont répétées jusqu'à ce que la totalité des points de fixation 40 souhaités soit réalisée.

De façon avantageuse, le procédé de mise en forme de la coiffe 24 et de fixation de portions de la coiffe entre elles peut être mis en oeuvre en partie ou en totalité de façon automatisée.

La mise en oeuvre pratique des modes de réalisation qui ont été décrits est à la portée de l'homme du métier à partir des indications fonctionnelles données ci-dessus et en utilisant pour le reste des techniques de fabrication et de montage usuelles.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention selon les revendications suivantes.

## Revendications

1. Coiffe (24) de siège comportant un ensemble de points de fixation (40) comprenant chacun une première portion (34) de la coiffe (24) fixée à une deuxième portion (35) de la coiffe (24), la première portion (34) de la coiffe (24) étant entourée d'une troisième portion (36) de la coiffe (24) et la deuxième portion (35) de la coiffe étant entourée d'une quatrième portion (37) de la coiffe (24), la troisième portion (35) de la coiffe (24) n'étant pas fixée à la quatrième portion (37) de la coiffe (24), et comprenant, pour chaque point de fixation, un pli (32) entre la première portion (34) de la coiffe (24) et la deuxième portion de la coiffe (24).

2. Coiffe (24) selon la revendication 1, comprenant une première face (26) et une deuxième face (28) opposée à la première face (26), dans laquelle les points de fixation (40) sont situés du côté de la première face (26).

3. Coiffe (24) selon la revendication 1 ou 2, dans laquelle les points de fixation (40) sont alignés le long de rangées de points de fixation (44).

4. Coiffe (24) selon la revendication 3, dans laquelle les points de fixation (40) sont décalés d'une rangée de points de fixation (44) par rapport à la rangée de points de fixation (44) adjacente.

5. Coiffe (24) selon les revendications 3 ou 4, dans laquelle les points de fixation (40) sont répartis régulièrement sur chaque rangée de points de fixation (44).

6. Siège (1) de véhicule comprenant au moins une matelassure (22) recouverte d'une coiffe (24) de siège selon l'une quelconque des revendications précédentes.

7. Siège selon la revendication 6, dans lequel le matériau de la matelassure (22) remplit au moins partiellement tout ou partie des plis (32).

8. Siège selon les revendications 6 ou 7 comprenant une coiffe (24) selon la revendication 2, dans lequel les points de fixation (40) sont disposés du côté de la matelassure (22).

9. Procédé de fabrication d'une coiffe (24) de siège (1) de véhicule, comprenant la formation d'un ensemble de points de fixation (40) comprenant chacun une première portion (34) de la coiffe fixée à une deuxième portion (35) de la coiffe, la première portion (34) de la coiffe (24) étant entourée d'une troisième portion (36) de la coiffe (24) et la deuxième portion (35) de la coiffe étant entourée d'une quatrième portion (37) de la coiffe (24), la troisième portion (36) de la coiffe (24) n'étant pas fixée à la quatrième portion (37) de la coiffe (24), et comprenant, pour chaque point de fixation, la formation d'un pli (32) entre la première portion (34) de la coiffe (24) et la deuxième portion (35) de la coiffe (24).

10. Procédé selon la revendication 9, dans lequel, pour chaque ensemble de points de fixation (40), la fixation de la première portion (34) à la deuxième portion (35) est réalisée par couture, par collage et/ou par soudage.

## Patentansprüche

1. Sitzabdeckung (24), der einen Satz von Befestigungspunkten (40) aufweist, die jeweils einen ersten Teil (34) der Abdeckung (24) aufweisen, der an einem zweiten Teil (35) der Abdeckung (24) befestigt ist, wobei der erste Teil (34) der Abdeckung (24) mit einem dritten Teil (36) der Abdeckung (24) umgeben ist und der zweite Teil (35) der Abdeckung mit einem vierten Teil (37) der Abdeckung (24) umgeben ist, der dritte Teil (35) der Abdeckung (24) nicht am vierten Teil (37) der Abdeckung (24) befestigt ist und für jeden Befestigungspunkt eine Falte (32) zwischen dem ersten Teil (34) der Abdeckung (24) und dem zweiten Teil der Abdeckung (24) aufweist.

2. Abdeckung (24) nach Anspruch 1, die eine erste Oberfläche (26) und eine zweite Oberfläche (28) entgegengesetzt zu der ersten Oberfläche (26) aufweist, wobei die Befestigungspunkte (40) an der Seite der ersten Oberfläche (26) angeordnet sind.

3. Abdeckung (24) nach Anspruch 1 oder 2, wobei die Befestigungspunkte (40) in Reihen (44) von Befestigungspunkten ausgerichtet sind.

4. Abdeckung (24) nach Anspruch 3, wobei die Befestigungspunkte (40) um eine Reihe (44) von Befestigungspunkten bezüglich der benachbarten Reihe (44) von Befestigungspunkten versetzt sind.

5. Abdeckung (24) nach Anspruch 3 oder 4, wobei die Befestigungspunkte (40) gleichmäßig auf jede Reihe (44) von Befestigungspunkten verteilt sind.

6. Fahrzeugsitz (1), der wenigstens eine Polsterung (22) aufweist, die mit der Sitzabdeckung (24) eines der vorgenannten Ansprüche abgedeckt ist.

7. Sitz nach Anspruch 6, wobei das Material der Polsterung (22) die Falten (32) wenigstens teilweise ausfüllt.

8. Sitz nach Anspruch 6 oder 7, der eine Abdeckung (24) nach Anspruch 2 aufweist, wobei die Befestigungspunkte (40) auf der Seite der Polsterung (22) angeordnet sind.

9. Verfahren zur Herstellung einer Abdeckung (24) eines Fahrzeugsitzes (1), das das Bilden eines Satzes von Befestigungspunkten (40) aufweist, die jeweils einen ersten Teil (34) der Abdeckung aufweisen, der an einem zweiten Teil (35) der Abdeckung befestigt ist, wobei der erste Teil (34) der Abdeckung (24) mit einem dritten Teil (36) der Abdeckung (24) umgeben ist und der zweite Teil (35) der Abdeckung mit einem vierten Teil (37) der Abdeckung (24) umgeben ist, der dritte Teil (36) der Abdeckung (24) nicht am vierten Teil (37) der Abdeckung (24) befestigt ist und für jeden Befestigungspunkt eine Falte (32) zwischen dem ersten Teil (34) der Abdeckung (24) und dem zweiten Teil (35) der Abdeckung (24) aufweist.

10. Verfahren nach Anspruch 9, wobei für jede Anordnung von Befestigungspunkten (40) das Befestigen des ersten Teils (34) an dem zweiten Teil (35) durch Nähen, Kleben und/oder Löten durchgeführt wird.

## Claims

1. A seat cover (24) comprising a set of attachment points (40), each comprising a first portion (34) of the cover (24) attached to a second portion (35) of the cover (24), the first portion (34) of the cover (24) being surrounded with a third portion (36) of the cover (24) and the second portion (35) of the cover being surrounded with a fourth portion (37) of the cover (24), the third portion (35) of the cover (24) being unattached to the fourth portion (37) of the cover (24), and comprising, for each attachment point, a pleat (32) between the first portion (34) of the cover (24) and the second portion of the cover (24).

2. The cover (24) of claim 1, comprising a first surface (26) and a second surface (28) opposed to the first surface (26), wherein the attachment points (40) are located on the side of the first surface (26).

3. The cover (24) of claim 1 or 2, wherein the attachment points (40) are aligned in rows (44) of attachment points.

4. The cover (24) of claim 3, wherein the attachment points (40) are offset by one row (44) of attachment points with respect to the adjacent row (44) of attachment points.

5. The cover (24) of claim 3 or 4, wherein the attachment points (40) are regularly distributed on each row (44) of attachment points.

6. A vehicle seat (1) comprising at least one padding (22) covered with the seat cover (24) of any of the foregoing claims.

7. The seat of claim 6, wherein the material of the padding (22) at least partially fills the pleats (32).

8. The seat of claim 6 or 7, comprising a cover (24) of claim 2, wherein the attachment points (40) are located on the side of the padding (22).

9. A method of manufacturing a cover (24) of a vehicle seat (1), comprising forming a set of attachment points (40) each comprising a first portion (34) of the cover attached to a second portion (35) of the cover, the first portion (34) of the cover (24) being surrounded with a third portion (36) of the cover (24) and the second portion (35) of the cover being surrounded with a fourth portion (37) of the cover (24), the third portion (36) of the cover (24) being unattached to the fourth portion (37) of the cover (24), and comprising, for each attachment point, a pleat (32) between the first portion (34) of the cover (24) and the second portion (35) of the cover (24).

10. The method of claim 9, wherein, for each assembly of attachment points (40), the attaching of the first portion (34) to the second portion (35) is performed by stitching, by gluing, and/or by soldering.
